Europäisches Patentamt

European Patent Office

Office européen des brevets

(19)

(11) Numéro de publication : **0 466 601 A1**

## (12) DEMANDE DE BREVET EUROPEEN

(21) Numéro de dépôt : **91401945.0**

(22) Date de dépôt : **11.07.91**

(51) Int. Cl.⁵ : **H04M 19/02**

(30) Priorité : **11.07.90 FR 9008840**

(43) Date de publication de la demande :
**15.01.92 Bulletin 92/03**

(84) Etats contractants désignés :
**AT BE CH DE DK ES GB GR IT LI LU NL SE**

(71) Demandeur : **CONSTRUCTIONS ET ETUDES
EN ELECTRONIQUE ET SYSTEMES (C2ES)
Avenue de l'Europe
F-71200 Le Creusot (FR)**

(72) Inventeur : **Blondot, Maurice Hugues Marie
Le Bourg, Gigny sur Saone
F-71240 Sennecey le Grand (FR)**

(74) Mandataire : **Bruder, Michel et al
Cabinet Michel Bruder Conseil en Brevets 10,
rue de la Pépinière
F-75008 Paris (FR)**

(54) Dispositif pour la commutation d'un signal d'appel alternatif cadencé sur un poste téléphonique relié à un autocommutateur.

(57) La présente invention concerne un dispositif pour la commutation d'un signal d'appel alternatif cadencé sur un poste téléphonique, relié à un autocommutateur au travers d'un joncteur d'abonné (1), dispositif caractérisé en ce que le circuit de commutation de ce signal d'appel comporte un composant électronique, du type d'un triac, qui est inséré, sur au moins l'un des deux fils (L1, L2) de la ligne téléphonique, entre le générateur (5) de ce signal d'appel et au moins une diode (D1, D2), cette diode (D1, D2) isolant les circuits d'alimentation microphonique (2) et les circuits audio (3) de basse fréquence dudit joncteur d'abonné (1), tout en polarisant selon une tension continue strictement positive le signal d'appel envoyé en série sur la ligne téléphonique.

La présente invention s'applique au domaine de la téléphonie et est plus particulièrement destinée à équiper les joncteurs d'abonné des autocommutateurs électroniques privés ou publics.

EP 0 466 601 A1

Jouve, 18, rue Saint-Denis, 75001 PARIS

_Fig 1_

La présente invention concerne un dispositif pour la commutation d'un signal d'appel alternatif cadencé sur un poste téléphonique relié à un autocommutateur avec arrêt immédiat de la sonnerie du poste lors de son décrochement. Elle s'applique au domaine de la téléphonie et elle est plus particulièrement destinée à équiper les joncteurs d'abonné des autocommutateurs électroniques privés ou publics.

Un autocommutateur est une installation de commutation d'abonnés permettant de relier localement un certain nombre de postes téléphoniques à un nombre plus restreint de lignes. Pour ce faire, chaque poste téléphonique est supervisé par un joncteur d'abonné ayant pour fonction principale d'assurer l'alimentation microphonique du poste téléphonique qu'il supervise (courant continu). Par ailleurs, le joncteur permet de gérer la signalisation téléphonique, c'est-à-dire qu'il détecte l'état du poste (raccroché ou décroché) et commute les signaux d'appel vers le poste téléphonique. Enfin, le joncteur permet de polariser les signaux de basse fréquence audio (300 Hz à 3400 Hz) transitant entre les transducteurs acoustiques du poste et la ligne téléphonique.

L'arrivée d'un appel sur une ligne téléphonique reliée à un autocommutateur privé provoque l'envoi d'un signal d'appel en série sur cette ligne : rappelons que le signal d'appel consiste en une tension de sonnerie, alternative et cadencée, qui peut être générée au moyen d'un onduleur découpant la tension continue fournie par une batterie (alimentation sauvegardée) ou par transformation de la tension du réseau électrique général (220 volts/50 herz). La tension de sonnerie est envoyée sur la ligne tant que le poste est raccroché. Dès que le poste est décroché, un circuit résistant est introduit entre les fils de la ligne téléphonique, ce qui provoque le passage du courant microphonique au travers du poste. La boucle de courant ainsi établie au décrochement est alors décelée par un circuit de détection spécialisé qui est en mesure d'arrêter l'envoi du courant d'appel sur la ligne (cas le plus courant de la signalisation voie par voie par changement d'état en courant continu).

Pour la mise en oeuvre de ces diverses fonctions, les joncteurs actuels se composent d'un ensemble de composants électroniques ou électrotechniques de puissance, et notamment d'un ou de plusieurs relais, qui sont principalement chargés de commuter le signal d'appel vers le poste téléphonique, tout en isolant l'alimentation microphonique continue et les circuits basse-fréquence du joncteur. Or, ces composants sont lourds, encombrants, coûteux et, du fait de certains de leurs défauts structurels, la gestion logicielle de leur commutation dans l'environnement des autocommutateurs électroniques actuels est souvent complexe. A cet égard, on sait que la commutation par relais occasionne de nombreux parasites, d'autant plus importants que la rupture de contact électrique se produit alors que l'intensité du courant alternatif d'appel traversant le relais est importante ; en effet, dans ce dernier cas, la variation instantanée du courant (dI/dt) ainsi que la tension de rupture en résultant par induction (L dI/dt) sont grandes (pics de commutation et leurs harmoniques). En conséquence, dans les autocommutateurs récents, il a été proposé de surveiller le passage à zéro du courant, ceci afin de réaliser toutes les commutations avec le minimum de parasites ; cette solution est cependant complexe à mettre en oeuvre et n'élimine pas les autres inconvénients liés à l'usage d'un relais, à savoir :

– un relais se commande généralement sous 12 volts avec un fort courant ; étant donné que les autocommutateurs électroniques actuels possèdent des circuits de commande à niveau logique basse tension (0/5 volts), on est conduit à élever la tension logique disponible au moyen de transistors à collecteur ouvert présents au niveau de chaque relais,

– le câblage d'un relais du type de ceux utilisés (relais dits "2RT" à deux positions de repos pour deux positions de travail) est complexe et son encombrement est relativement important,

– l'isolement électrique entre les signaux logiques de commande et les signaux d'appel haute tension est limité à 1500 volts, ce qui peut conduire à certaines pannes dans des situations de surtension imprévues du signal d'appel.

Par ailleurs, du fait de l'emploi de relais, il est plus économique de réaliser la détection de boucle du courant microphonique d'une manière centralisée au niveau de l'autocommutateur. Or, il existe, dans ce cas, un temps non négligeable pendant lequel le poste est décroché, c'est-à-dire pendant lequel tous les signaux circulant vers le poste téléphonique traverse les circuits microphoniques, sans que le signal d'appel ait été interrompu ; en effet, la tension d'alimentation microphonique est filtrée, généralement par des selfs, et la détection de boucle, placée derrière ces selfs, présente des temps de réponse pouvant atteindre jusqu'à dix fois la durée d'une période du signal d'appel alternatif. Ceci conduit au maintien du signal d'appel sur la ligne, qui vient se superposer aux signaux audio de basse fréquence, de sorte que l'abonné "entend" encore la sonnerie pendant un certain temps dans l'écouteur du poste. Par ailleurs, en détection centralisée, si on fait sonner plusieurs postes alors qu'un appel extérieur arrive, et si l'un des postes est décroché, la détection du décrochement va provoquer l'arrêt du générateur central de sonnerie, d'où des "blancs" de sonnerie sur tous les autres postes.

La présente invention vise à remédier à ces inconvénients en proposant un dispositif pour la commutation d'un signal d'appel alternatif cadencé, émis par un générateur d'appel, sur un poste téléphonique relié à un autocommutateur au travers d'un joncteur d'abonné, caractérisé en ce qu'il comporte :

– d'une part, inséré en série entre ledit générateur d'appel et au moins l'un des deux fils de la ligne téléphonique relié audit poste, un triac ou un composant électronique équivalent à un triac,

– d'autre part, au moins une diode, ou un composant analogue susceptible de présenter une impédance infinie à ses bornes, qui est inséré(e) entre ledit poste téléphonique et les circuits d'alimentation microphonique, ou alimenteurs, dudit joncteur, ladite diode ou lesdites diodes polarisant le signal d'appel selon une tension continue non nulle, tout en isolant galvaniquement lesdits alimenteurs durant toute la phase de sonnerie pendant laquelle le combiné dudit poste téléphonique est raccroché.

Bien entendu, cette ou ces diodes isolent également les circuits audio de basse fréquence du signal alternatif d'appel.

L'utilisation de triacs ou analogues comme éléments commutateurs du signal d'appel, déjà proposée dans les brevets FR-2 366 756 et FR-2 381 425 au nom de la société LCT, dans le brevet EP-399 997 au nom de la société SIEMENS, dans le brevet US-4 609 782 au nom de la société MOTOROLA ou encore dans le brevet US-4 201 897 au nom de la société GTE, procure des avantages importants que ne peuvent fournir des relais : la commutation du signal d'appel est plus fiable, elle se produit d'une manière naturelle au passage à zéro du courant, ce qui évite les pics de rupture du circuit microphonique et permet de simplifier la commande logicielle de l'autocommutateur, et enfin, l'isolement entre le circuit de détection d'appel (sonnerie) et les circuits logiques de commande est très supérieur à celui fourni par un relais (4000 volts contre 1500 volts). Par ailleurs, le câblage des triacs est plus simple que celui d'un relais et leur encombrement est moindre.

Ces avantages résultant de l'emploi de triacs ne sont cependant pas suffisants, en soi, pour procurer un joncteur d'abonné simple de conception et donc peu cher à fabriquer. En effet, la détection du décrochement du combiné du poste téléphonique impose qu'un courant continu traverse le détecteur de boucle (détection du décrochement du combiné du poste), que ce soit en phase sonnerie ou pendant les blancs de sonnerie. Par exemple, dans les brevets de la société LCT déjà mentionnés, il est nécessaire d'employer une alimention microphonique qui se décompose en deux circuits dont le fonctionnement est synchronisé et qui sont chargés d'alimenter séparément, et successivement, la ligne téléphonique ; le dispositif proposé dans ces derniers brevets est très complexe, et on notera, en outre, que le signal d'appel commuté par les triacs est polarisé ce qui n'est pas idéal quant à leur fonctionnement (ayant à subir une tension moyenne non nulle). Dans la réalisation préconisée par le brevet de la société SIEMENS, le triac de commutation n'est pas polarisé, mais le circuit est prévu pour que les alimenteurs délivrent en permanence un courant continu sur la ligne téléphonique (la détection de boucle au décrochement du combiné s'effectuant ainsi sur ladite ligne). Le circuit proposé dans le brevet de la société PHILIPS, également mentionné plus haut, intègre, mais de manière fort complexe, un circuit de détection du décrochement du combiné du poste téléphonique avec arrêt immédiat de la sonnerie. A cet égard, la polarisation de la ligne est référencée à la masse du joncteur, la tension d'alimentation microphonique provenant d'un générateur de tension d'impédance nulle ; une diode, rendue passante pendant une alternance sur deux du signal d'appel, évite la destruction du circuit d'alimentation microphonique mais ne permet de l'isoler complétement par rapport à la masse.

Selon la présente invention, la ou les diodes insérées entre les alimenteurs et le poste téléphonique constituent un moyen beaucoup plus simple, plus efficace et moins coûteux de remplir toutes les fonctions citées précédemment, tout en permettant de réaliser une détection de boucle particulièrement simple et fiable.

Ainsi, le rôle des diodes d'isolation et de polarisation placées en série avec les triacs sur chaque fil de la ligne téléphonique est très important. En effet, ces diodes présentent, en phase sonnerie, une impédance infinie isolant totalement les alimenteurs de la masse du joncteur ; leur rôle n'est donc pas simplement d'écrêter une alternance sur deux du signal d'appel alternatif, ce qui est courant sur d'autres circuits de commutation, tels que celui proposé dans la demande de brevet DE-3 616 488 au nom de la société PHILIPS. En phase sonnerie, ces diodes, tout en polarisant le signal d'appel à une tension moyenne non nulle, jouent alors essentiellement un rôle de coupe-circuit.

Lors du décrochement du combiné du poste téléphonique, un courant continu dû à la polarisation de la ligne téléphonique s'établit et vient se superposer au courant d'appel alternatif. Du fait de l'isolement galvanique total procuré par les diodes en phase sonnerie, on peut placer le circuit de détection de boucle sur l'une des branches des alimenteurs sans risquer qu'il soit déclenché par le signal d'appel (qui est, dans les circuits proposés par les brevets précédents, normalement injecté dans les alimenteurs). Le courant continu établi dans le poste téléphonique au décrochement du combiné est ainsi détecté immédiatement. En outre, on comprendra que, lorsque le poste est décroché, la ou les diodes conduisent, les alimenteurs n'étant donc plus isolés de la masse du joncteur.

On pourrait également envisager d'employer, au lieu des diodes, deux triacs chargés d'isoler la ligne téléphonique des autres éléments du joncteur d'abonné (circuits audio de basse fréquence et circuits d'alimentation microphonique). Dans ce dernier cas, il n'est cependant pas possible de polariser le signal d'appel selon une tension strictement positive, et la commande de ces triacs rend le circuit plus complexe. Il est ainsi beaucoup plus simple et avantageux d'utiliser des composants passifs du type de diodes, composants dont la commutation n'est pas commandée mais dont le rôle est prépondérant pour le fonctionnement du circuit de commutation.

Avantageusement, le dispositif de commutation selon l'invention est du type permettant l'arrêt immédiat de la sonnerie d'un poste téléphonique lors de son décrochement. A cet égard, chaque triac, ou chaque composant équivalent à un triac, est commandé par sa gâchette au moyen d'un signal logique de déclenchement présentant, durant l'envoi du signal d'appel sur la ligne téléphonique, deux phases successives, à savoir :

a) quand le combiné du poste téléphonique est raccroché, une première phase pendant laquelle ce signal de déclenchement est continu, ou présente la forme d'un signal alternatif rectangulaire de rapport cyclique strictement supérieur à 0,5, ce signal alternatif rectangulaire étant en phase avec le courant du signal d'appel à commuter de manière à ce qu'il force la conduction dudit triac chaque fois que ce courant retrouve une intensité nulle,

b) quand le combiné du poste téléphonique est décroché, une seconde phase pendant laquelle le signal de déclenchement de la gâchette dudit triac ou dudit composant se présente sous la forme d'un signal alternatif rectangulaire de rapport cyclique strictement inférieur à 0,5, ce signal alternatif rectangulaire étant en phase avec le courant du signal d'appel à commuter de manière à ce que la conduction de ce même triac ou de ce même soit interrompue dès que ledit courant présente une intensité nulle ;

en outre, le signal de déclenchement de la gâchette du triac évolue de ladite première phase à ladite deuxième phase par le biais de la détection de la boucle de courant microphonique qui s'établit au moment du décrochement du combiné dudit poste téléphonique.

Préférentiellement, cette détection de boucle est réalisée localement au niveau dudit joncteur, ce qui procure une détection décentralisée du décrochement du combiné d'un poste téléphonique, pouvant agir très rapidement sur la commande de l'élément commutateur du signal d'appel, et supprimant du même coup les "blancs" de sonnerie déjà mentionnés.

Selon une forme préférée de réalisation de l'invention, chaque triac ou chaque composant équivalent à un triac est ainsi commandé par sa gâchette au moyen d'un signal logique de déclenchement combinant, sous la forme d'un ET logique, le signal logique de détection de la boucle de courant microphonique produite par le décrochement du combiné du poste téléphonique et un signal logique de commande du générateur de sonnerie (ou générateur du signal d'appel). Il s'agit de la manière la plus directe pour fabriquer un signal logique de déclenchement rectangulaire présentant les caractéristiques requises en phase sonnerie ; à cet égard, on comprendra tout l'intérêt de l'isolement galvanique total procuré par les diodes insérés entre le poste téléphonique et les alimenteurs, le signal logique de détection de boucle restant à un même niveau logique tant que le poste n'est pas décroché.

L'invention sera mieux comprise à la lecture de la description qui va suivre d'une forme de réalisation donnée à titre d'exemple non limitatif d'un dispositif pour la commutation du signal d'appel sur un poste téléphonique relié à un autocommutateur, au travers d'un joncteur d'abonné, en référence aux dessins annexés sue lesquels :

– la figure 1 est un schéma de principe d'un joncteur d'abonné incorporant un dispositif de commutation conforme aux enseignements de la présente invention,

– les figures 2a, 2b, et 2c sont des chronogrammes représentant l'allure des signaux présents, en phase sonnerie, poste raccroché, sur les fils et aux bornes de la ligne téléphonique reliée au joncteur représenté sur la figure 1.

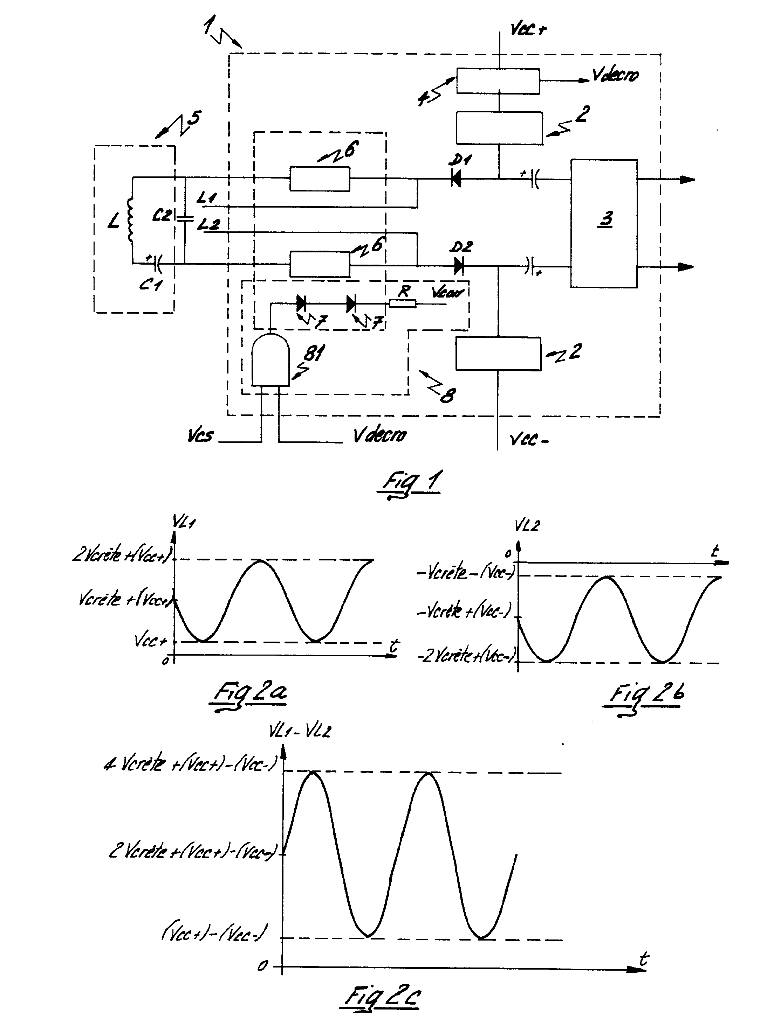

Le joncteur d'abonné 1 décrit en référence à la figure 1 est alimenté entre une tension continue négative $V_{cc-}$ et une tension continue positive $V_{cc+}$. La tension d'alimentation microphonique ainsi disponible est filtrée et mise en forme au travers de deux alimenteurs 2 du type de selfs électroniques.

Mis à part cette fonction d'alimentation du poste téléphonique qu'il supervise, le joncteur 1 assure classiquement trois fonctions principales, nécessitant chacune des circuits particuliers décrits successivement ci-après :

a) la transmission des signaux audio de basse fréquence est assurée par des circuits audio 3 de basse fréquence. Ces circuits audio 3 peuvent être du type d'un translateur suivi d'une matrice de connexion en commutation électronique dite "spatiale", d'un système numérique avec un codeur/décodeur suivi d'un filtre en commutation numérique, ou encore d'un système dit "PAM" (pour Pulse Amplitude Modulation) suivi d'un filtre de mise en forme en commutation dite "PAM". Deux condensateurs polarisés, placés en série sur la ligne de transmission du joncteur 1, isolent les circuits audio 3 du courant continu microphonique lorsque celui-ci traverse le poste téléphonique.

b) conformément à une variante préférée de la présente invention, la détection de la boucle de courant microphonique résultant du décrochement du combiné du poste téléphonique est assu-

rée localement par un circuit de détection de boucle 4, placé en série derrière l'alimenteur 2 de la branche positive $V_{cc+}$ de la tension d'alimentation microphonique. Ce circuit de détection de boucle 4 permet de faire passer un signal logique dit $V_{décro}$ d'une valeur positive (1 logique) lorsque le poste est raccroché, à une valeur nulle (0 logique) lorsque le poste est décroché. La détection de courant présente un seuil permettant de s'affranchir des inconvénients liés au passage d'un courant continu au travers de certains postes téléphoniques alors qu'ils sont en position raccrochée.

c) le dernier rôle du joncteur 1 est d'assurer la commutation du signal d'appel alternatif cadencé sur le poste téléphonique, qui est branché entre les fils L1 et L2 de la ligne téléphonique, chaque fois que survient un appel à destination de ce poste. Ce signal d'appel provient d'un générateur de sonnerie 5 dont on a représenté le secondaire, à savoir l'enroulement secondaire L d'un transformateur servant à abaisser la tension alternative du réseau, et une capacité polarisée C1 isolant le générateur de sonnerie 5 du courant continu microphonique.

La fonction de commutation est assurée, conformément à une forme de réalisation préférée de la présente invention, par deux phototriacs 6 placés chacun en série sur l'un des fils L1 et L2 de la ligne téléphonique, et coopérant avec deux diodes D1 et D2 situées chacune entre un phototriac 6 et une branche de l'alimentation microphonique. Rappelons que ce type de triac présente une gâchette isolée de sa cathode et de son anode, obtenue par une photodiode interne 7 dont la conduction permet de débloquer le phototriac 6 lorsque le courant commuté s'annule. L'utilisation d'un tel composant permet de contrôler la commutation du signal d'appel par le biais direct des circuits logiques de commande de l'autocommutateur électronique auquel appartient le joncteur d'abonné 1, et procure un isolement galvanique très élevé entre les circuits de commutation haute tension et les circuits logiques de commande.

Avantageusement, la détection, au niveau du joncteur 1, de la boucle de courant microphonique provoquée par le décrochement du combiné du poste téléphonique supervisé par ce joncteur 1, permet de commander le blocage des phototriacs 6 d'une manière locale, c'est-à-dire décentralisée, avec tous les avantages déjà mentionnés.

De plus, on connaît des circuits intégrant dans le même boîtier les deux phototriacs 6 qui sont alors commandés par deux photodiodes 7 mises en série, ce qui signifie que leur conduction et leur blocage sont simultanés.

On décrira maintenant les moyens mis en oeuvre afin que coopèrent, directement au niveau du joncteur 1, le circuit de détection de boucle 4 et le circuit de commande de gâchette 8 des phototriacs 6. Ce dernier circuit 8 comporte un circuit logique 81, du type d'une porte ET, réalisant l'addition du signal $V_{décro}$ et d'un signal de commande $V_{cs}$ du générateur de sonnerie 5 ; la sortie du circuit logique 81 est reliée aux photodiodes 7 servant de gâchette aux phototriacs 6, ces photodiodes 7 étant polarisées à une tension continue $V_{com}$ au travers d'une résistance R.

On rappellera également le rôle des diodes D1 et D2 qui est, d'une part, d'isoler l'alimentation microphonique et les circuits audio 3 du signal d'appel alternatif haute tension envoyé sur la ligne téléphonique L1/L2, et, d'autre part, de polariser ce signal d'appel selon une tension continu strictement positive. A cet égard, en phase sonnerie, lorsque le combiné du poste téléphonique supervisé par le joncteur 1 est raccroché, le courant alternatif d'appel, provenant du générateur de sonnerie 5, est appliqué en série sur la ligne téléphonique L1/L2. Pour des raisons de norme, ce signal se présente sous la forme d'un signal symétrique en rapport à une référence commune, ce qui permet de compenser entre eux les champs magnétiques et électriques d'influence générés sur chaque paire de fils d'un même câble téléphonique (fils torsadés) ; en cas de non symétrie, il se produirait un phénomène de diaphonie d'une ligne téléphonique sur l'autre. Conformément aux figures 2a et 2b, les tensions alternatives présentes sur les fils L1 et L2 de la ligne téléphonique sont donc symétriques, et, selon l'invention, elles sont polarisées respectivement à des tensions $(V_{crête} + V_{cc+})$ et $(-V_{crête} + V_{cc-})$ non nulles grâce à l'utilisation des deux diodes D1 et D2 qui interdisent le passage du courant alternatif d'appel dans les branches $V_{cc+}$ et $V_{cc-}$ de l'alimentation microphonique. De cette manière, le signal d'appel (fig.2c) est polarisé positivement à une tension continue égale à $(2 \times V_{crête} + V_{cc+} - V_{cc-})$.

Aux bornes du générateur de sonnerie 5, on place un condensateur non polarisé C2 qui permet de limiter les variations brutales de tension aux bornes des phototriacs 6, et d'éviter les amorçages intempestifs de ces derniers lors du décrochement du poste téléphonique.

En phase sonnerie, les circuits logiques de commande du joncteur 1 positionnent la tension de commande $V_{cs}$ de la sonnerie 50 au niveau logique haut (soit ici +5 V).

Lorsque le combiné du poste téléphonique est raccroché, l'impédance présente aux bornes de la ligne téléphonique L1/L2 ne possède aucune partie résistive et, par conséquent, aucun courant continu ne peut circuler dans le circuit de détection de boucle 4 ; en outre, comme les diodes D1 et D2 sont bloquées, le signal $V_{décro}$ de détection de boucle ne suit pas le signal alternatif d'appel et il reste à un niveau logique constant, par exemple le niveau haut. Dans ce cas, le signal émis par le circuit logique 81 du circuit de commande de gâchette 8 des phototriacs 6 se trouve au niveau logique haut et les photodiodes 7 sont passantes en permanence, forçant la conduction des deux phototriacs 6.

Dès que le combiné du poste téléphonique est décroché, on introduit un circuit résistant en parallèle sur le poste téléphonique ; le courant continu microphonique peut alors s'établir dans le poste téléphonique et vient se superposer au courant alternatif d'appel. Il est important de remarquer que le courant microphonique présente un régime transitoire d'établissement introduisant un temps de réponse, qui est normalement fonction de l'impédance du circuit dans lequel il circule, c'est-à-dire que ce temps de réponse dépend bien entendu de l'impédance des alimenteurs 2, tels que particulièrement des selfs électroniques ; il semblerait donc que le circuit de détection de boucle 4 ne puisse pas détecter immédiatement le décrochement du combiné du poste téléphonique, ce qui conduirait aux inconvénients déjà mentionnés d'un arrêt non immédiat de l'envoi du signal d'appel sur la ligne téléphonique. Or, grâce aux deux diodes D1 et D2, le courant alternatif d'appel présente une valeur moyenne non nulle ; en conséquence, dès que les diodes D1 et D2 se mettent à conduire du fait du décrochement du poste téléphonique, le circuit de détection de boucle 4 détecte immédiatement un courant continu supérieur à son courant de détection seuil. Ce courant continu résulte de la superposition du courant microphonique dans son régime d'établissement (régime transitoire dont la constante de temps est longue en raison des selfs 2), et du courant de polarisation non nulle du courant alternatif d'appel (qui ne présente pas de régime transitoire). En conséquence, le signal $V_{décro}$ change d'état dès le décrochement du poste téléphonique et passe au niveau logique bas (à savoir 0 volt), ce qui provoque également le changement d'état du signal logique de commande du circuit de commande de gâchette 8 des phototriacs 6. A ce moment là, les photodiodes 7 ne pouvant plus conduire, dès que le courant alternatif d'appel passe par une valeur nulle, les phototriacs 6 se bloquent ce qui a pour effet immédiat de stopper la commutation du signal d'appel sur le poste téléphonique placé entre les fils L1 et L2 de la ligne. Par ailleurs, les circuits logiques de commande de l'autocommutateur ayant détecté le changement d'état du signal $V_{decro}$, ils stoppent l'envoi du signal d'appel en série sur la ligne et provoquent le changement d'état du signal de commande $V_{cs}$ du générateur de sonnerie 5. On notera que si le signal $V_{décro}$ n'était pas réinjecté à l'entrée du circuit logique 81 du circuit de commande de gâchette 8 des phototriacs 6, et si le signal d'appel alternatif continuait d'être envoyé sur la ligne téléphonique, le signal $V_{decro}$ aurait l'allure d'un signal alternatif rectangulaire de rapport cyclique inférieur à 0,5, puisque ce signal résulte de la comparaison du courant alternatif polarisé traversant le poste avec le courant de détection seuil non nul du circuit de détection de boucle 4.

Par ailleurs, on sait que certains postes téléphoniques consomment un faible courant continu en position raccrochée. Ce faible courant vient se superposer, en phase sonnerie, au courant alternatif d'appel qui, de ce fait, n'est plus polarisé au même niveau puisque les diodes D1 et D2 conduisent ; selon l'invention, il est prévu que le courant de détection seuil du circuit de détection de boucle 4 soit substantiellement supérieur à ce courant de fuite continu dû à certains postes. De la sorte, le signal alternatif d'appel, qui traverse maintenant le circuit de détection de boucle 4 en permanence, provoque un changement d'état alternatif du signal logique $V_{decro}$, et donc du signal de commande du circuit de commande de gâchette 8, mais le signal rectangulaire ainsi constitué présente un rapport cyclique supérieur à 0,5, tout en étant en phase avec le courant alternatif d'appel. De cette façon, chaque fois que ce signal se trouve à un niveau bas, les photodiodes 7 des phototriacs 6 ne conduisent plus, mais, étant donné que l'alternance positive ou négative du courant d'appel est commencée au moment où se produit ce changement d'état, les phototriacs 6 ne cessent pas de conduire et le signal d'appel continue d'être envoyé sur le générateur de sonnerie 5.

Il est bien évident que l'invention n'est pas limitée à la forme de réalisation précédemment décrite ou représentée sur les dessins annexés mais s'étend, au contraire, à tout dispositif de commutation du signal d'appel sur le circuit de détection d'appel d'un poste téléphonique avec ou sans arrêt immédiat de la sonnerie, réalisé à l'aide d'éléments techniques équivalents à ceux décrits et mis en oeuvre dans l'esprit de l'invention. En particulier, on pourrait remplacer les triacs ou les phototriacs de commutation par des relais statiques dont la commande est identique.

De même, dans les pays tels les Etats Unis d'Amérique où la norme de symétrisation du signal d'appel n'est pas en application, il est possible de référencer directement l'un des deux fils L1, L2 de la ligne téléphonique à la masse du joncteur 1. Pour cela, il suffit de référencer $V_{cc}$+ au 0 volt, de supprimer le phototriac 6 inséré sur la ligne L1 par exemple, de supprimer également l'alimenteur 2 sur cette ligne et le condensateur polarisé placé entre l'anode de la diode D1 et le circuit audio 3. Il suffit également de polariser la borne positive du second condensateur polarisé placé entre la cathode de la diode D2 et le circuit 3 pour pouvoir attaquer directement une matrice de connexion sans passer par un translateur.

La présente invention s'applique au domaine de la téléphonie et est plus particulièrement destinée à équiper les joncteurs d'abonné des autocommutateurs électroniques privés ou publics.

## Revendications

**1** - Dispositif pour la commutation d'un signal d'appel alternatif cadencé, émis par un générateur d'appel (5), sur un poste téléphonique relié à un autocommutateur au travers d'un joncteur d'abonné (1), caractérisé en ce qu'il comporte :

– d'une part, inséré en série entre ledit générateur d'appel (5) et au moins l'un des deux fils (L1, L2) de la ligne téléphonique relié audit poste, un triac ou un composant électronique équivalent à un triac,

– d'autre part, au moins une diode (D1, D2), ou un composant analogue susceptible de présenter une impédance infinie à ses bornes, qui est inséré(e) entre ledit poste téléphonique et les circuits d'alimentation microphonique, ou alimenteurs (2), dudit joncteur (1), ladite ou lesdites diodes (D1, D2) polarisant le signal d'appel selon une tension continue non nulle, tout en isolant galvaniquement lesdits alimenteurs (2) durant toute la phase de sonnerie pendant laquelle le combiné dudit poste téléphonique est raccroché.

**2** - Dispositif pour la commutation d'un signal d'appel alternatif cadencé sur un poste téléphonique, selon la revendication 1, caractérisé en ce que le ou les composants électroniques utilisés pour la commutation dudit signal d'appel sont des triacs, des relais statiques ou encore des phototriacs (6).

**3** - Dispositif pour la commutation d'un signal d'appel alternatif cadencé sur un poste téléphonique selon l'une quelconque des revendications précédentes, caractérisé en ce que chaque triac, ou chaque phototriac (6), ou chaque composant équivalent à un triac, est commandé par sa gâchette au moyen d'un signal logique de déclenchement, présentant deux phases successives durant l'envoi du signal d'appel sur la ligne téléphonique, à savoir :

a) quand le combiné du poste téléphonique est raccroché, une première phase pendant laquelle ce signal de déclenchement est continu, ou présente la forme d'un signal alternatif rectangulaire de rapport cyclique strictement supérieur à 0,5, ce signal alternatif rectangulaire étant en phase avec le courant du signal d'appel à commuter de manière à ce qu'il force la conduction dudit triac ou dudit phototriac (6) chaque fois que ce courant retrouve une intensité nulle,

b) quand le combiné du poste téléphonique est décroché, une seconde phase pendant laquelle ce signal de déclenchement de la gâchette dudit triac ou dudit phototriac (6) se présente sous la forme d'un signal alternatif rectangulaire de rapport cyclique strictement inférieur à 0,5, ce signal alternatif rectangulaire étant en phase avec le courant du signal d'appel à commuter de manière à ce que la conduction de ce même triac ou de ce même phototriac (6) soit interrompu dès que ce courant présente une intensité nulle ;

en outre, le signal de déclenchement de la gâchette du triac, du phototriac (6) ou du composant équivalent à un triac, évolue de ladite première phase à ladite deuxième phase par le biais de la détection de la boucle de courant microphonique produite par le décrochement du combiné dudit poste téléphonique.

**4** - Dispositif pour la commutation d'un signal ppel alternatif cadencé sur un poste téléphonique selon la revendication 3, caractérisé en ce que chaque triac ou phototriac (6) ou chaque composant équivalent à un triac est commandé par sa gâchette au moyen d'un signal logique de déclenchement combinant, sous la forme d'un et logique, le signal logique $V_{decro}$ de détection de la boucle de courant microphonique produite par le décrochement du combiné du poste téléphonique et un signal logique de commande $V_{cs}$ du générateur de sonnerie (5).

**5** - Dispositif pour la commutation d'un signal d'appel alternatif cadencé sur un poste téléphonique selon l'une quelconque des revendications 3 ou 4, caractérisé en ce que le circuit de détection de boucle (4) fournissant le signal logique $V_{decro}$ est disposé en série sur l'une des branches des circuits d'alimentation microphonique, ou alimenteurs (2), dudit joncteur (1).

Fig 1

Fig 2a

Fig 2b

Fig 2c

9

**Office européen des brevets**

# RAPPORT DE RECHERCHE EUROPEENNE

Numero de la demande

EP    91 40 1945

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X<br>A | US-A-4 609 782 (BROWN)<br>* abrégé; figures 1-3 *<br>--- | 1,2<br>3-5 | H04M19/02 |
| X<br>A | US-A-4 201 897 (DORTH ET AL)<br>* colonne 1, ligne 44 - ligne 53; figure 1 *<br>--- | 1,2<br>3-5 | |
| X<br>A | DE-A-3 616 488 (PHILIPS)<br>* colonne 4, ligne 12 - ligne 19; figure 1 *<br>--- | 1,2<br>3-5 | |
| X<br>A | FR-A-2 381 425 (LCT)<br>* figure 1 *<br>--- | 1,2<br>3-5 | |
| P,X<br>P,A | EP-A-0 399 997 (SIEMENS)<br>* colonne 2, ligne 51 - colonne 3, ligne 6; figures 2,3 *<br>----- | 1,2<br>3-5 | |

**DOMAINES TECHNIQUES RECHERCHES (Int. Cl.5)**

H04M

Le présent rapport a été établi pour toutes les revendications

| Lieu de la recherche | Date d'achèvement de la recherche | Examinateur |
|---|---|---|
| LA HAYE | 13 SEPTEMBRE 1991 | BISCHOF J.L.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)